# EUROPEAN PATENT SPECIFICATION

(11) **EP 4 181 709 B1**
(45) Date of publication and mention of the grant of the patent: **09.10.2024**
(21) Application number: 21743514.8
(22) Date of filing: 15.07.2021
(51) Int. Cl.: A24F 40/46, A24F 40/57, A24F 40/51, G01K 1/14, G01K 7/02, A24F 40/10

(54) **NICOTINE E-VAPING DEVICE WITH INTEGRAL HEATER-THERMOCOUPLE**
E-VAPING-VORRICHTUNG FÜR NIKOTIN MIT INTEGRIERTEM HEIZ-WÄRME-ELEMENT
DISPOSITIF DE VAPOTAGE DE NICOTINE AVEC THERMOCOUPLE ET DISPOSITIF DE CHAUFFAGE FORMÉS D'UN SEUL TENANT

(30) Priority: 15.07.2020 US 202016929527
(43) Date of publication of application: 24.05.2023
(73) Proprietor: Philip Morris Products S.A., 2000 Neuchâtel (CH)
(72) Inventor: HAWES, Eric A., Richmond, Virginia 23219 (US); LAU, Raymond W., Richmond, Virginia 23219 (US)
(74) Representative: Reddie & Grose LLP
(86) International application number: PCT/EP2021/069835
(87) International publication number: WO 2022/013384

(56) References cited:
- WO-A1-2021/009483
- CN-A- 111 150 109
- CN-U- 203 851 801
- US-A1- 2017 325 507
- US-A1- 2017 325 510
- US-A1- 2018 077 967

## Description

The present disclosure relates to temperature measurement and control in nicotine electronic vaping (e-vaping) devices.

US 2018/077967 A1 describes vaporizer apparatuses. The vaporizer may include a cartridge and a reusable component. The cartridge includes a tank configured to hold a liquid vaporizable material therein, a heater (e.g. a wick and coil assembly) configured to heat the vaporizable material in the tank, and an air tube extending from the tank to a mouthpiece. Contacts are configured to connect with contacts on the reusable component to provide power to activate the wick and coil assembly. It is described how the Seebeck effect alone or the Seebeck effect in conjunction with a resistance measurement can be used for temperature control of a heating element that has a material transition (junction) at the position where temperature is to be controlled. WO2021/009483 A1 also discloses a cartridge comprising a heater-thermocouple.

The features of the invention are provided in the independent claims, to which reference should now be made. Additional, optional features are provided in the dependent claims.

The various features and advantages of the non-limiting embodiments herein may become more apparent upon review of the detailed description in conjunction with the accompanying drawings. The accompanying drawings are merely provided for illustrative purposes and should not be interpreted to limit the scope of the claims. The accompanying drawings are not to be considered as drawn to scale unless explicitly noted. For purposes of clarity, various dimensions of the drawings may have been exaggerated.
FIG. 1 is a front view of a nicotine e-vaping device according to an example embodiment.
FIG. 2 is a side view of the nicotine e-vaping device of FIG. 1.
FIG. 3 is a rear view of the nicotine e-vaping device of FIG. 1.
FIG. 4 is a proximal end view of the nicotine e-vaping device of FIG. 1.
FIG. 5 is a distal end view of the nicotine e-vaping device of FIG. 1.
FIG. 6 is a front view of the nicotine e-vaping device of FIG. 1 when the nicotine cartridge and the device body are not engaged.
FIG. 7 is an exploded view of the nicotine cartridge in FIG. 6.
FIG. 8 is a first exploded view of the vaporizer in FIG. 7.
FIG. 9 is a second exploded view of the vaporizer in FIG. 7.
FIG. 10 is an exploded view of the vaporizing module in FIG. 8.
FIG. 11 is an exploded view of the vaporizing module in FIG. 9.
FIG. 12 is an exploded view of the heater subassembly in FIG. 10.
FIG. 13 is an exploded view of the heater subassembly in FIG. 11.
FIG. 14 is a partially-exploded view of the device body in FIG. 6.
FIG. 15 is a perspective view of the battery section in FIG. 14.
FIG. 16 is a partially-exploded view of the battery section of FIG. 15.
FIG. 17 is a partially-exploded view of the battery subassembly in FIG. 16.
FIG. 18 is a cross-sectional view of the nicotine cartridge and a partial cross-sectional view of the device body of FIG. 6 when not engaged.
FIG. 19 is a cross-sectional view of the nicotine cartridge and a partial cross-sectional view of the device body of FIG. 18 when engaged.
FIG. 20 is an enlarged view of the cross-section of FIG. 19.

Some detailed example embodiments are disclosed herein. However, specific structural and functional details disclosed herein are merely representative for purposes of describing example embodiments. Example embodiments may, however, be embodied in many alternate forms as defined by the scope of the appended claims and should not be construed as limited to only the example embodiments set forth herein

Accordingly, while example embodiments are capable of various modifications and alternative forms, example embodiments thereof are shown by way of example in the drawings and will herein be described in detail. Like numbers refer to like elements throughout the description of the figures.

It should be understood that when an element or layer is referred to as being "on," "connected to," "coupled to," "attached to," "adjacent to," or "covering" another element or layer, it may be directly on, connected to, coupled to, attached to, adjacent to or covering the other element or layer or intervening elements or layers may be present. In contrast, when an element is referred to as being "directly on," "directly connected to," or "directly coupled to" another element or layer, there are no intervening elements or layers present. Like numbers refer to like elements throughout the specification. As used herein, the term "and/or" includes any and all combinations or sub-combinations of one or more of the associated listed items.

It should be understood that, although the terms first, second, third, and so forth may be used herein to describe various elements, regions, layers and/or sections, these elements, regions, layers, and/or sections should not be limited by these terms. These terms are only used to distinguish one element, region, layer, or section from another region, layer, or section. Therefore, a first element, region, layer, or section discussed below could be termed a second element, region, layer, or section without departing from the teachings of example embodiments.

Spatially relative terms (for example, "beneath," "below," "lower," "above," "upper," and the like) may be used herein for ease of description to describe one element or feature's relationship to another element or feature as illustrated in the figures. It should be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Therefore, the term "below" may encompass both an orientation of above and below. The device may be otherwise oriented (rotated 90 degrees or at other orientations) and the spatially relative descriptors used herein interpreted accordingly.

The terminology used herein is for the purpose of describing various example embodiments only and is not intended to be limiting of example embodiments. As used herein, the singular forms "a," "an," and "the" are intended to include the plural forms as well, unless the context clearly indicates otherwise. It will be further understood that the terms "includes," "including," "comprises," and/or "comprising," when used in this specification, specify the presence of stated features, integers, steps, operations, and/or elements, but do not preclude the presence or addition of one or more other features, integers, steps, operations, elements, and/or groups thereof.

When the terms "about" or "substantially" are used in this specification in connection with a numerical value, it is intended that the associated numerical value includes a manufacturing or operational tolerance (for example, ±10 percent) around the stated numerical value. Moreover, when the terms "generally" or "substantially" are used in connection with geometric shapes, it is intended that precision of the geometric shape is not required but that latitude for the shape is within the scope of the disclosure. Furthermore, regardless of whether numerical values or shapes are modified as "about," "generally," or "substantially," it will be understood that these values and shapes should be construed as including a manufacturing or operational tolerance (for example, ±10 percent) around the stated numerical values or shapes.

Unless otherwise defined, all terms (including technical and scientific terms) used herein have the same meaning as commonly understood by one of ordinary skill in the art to which example embodiments belong. It will be further understood that terms, including those defined in commonly used dictionaries, should be interpreted as having a meaning that is consistent with their meaning in the context of the relevant art and will not be interpreted in an idealized or overly formal sense unless expressly so defined herein.

Hardware may be implemented using processing or control circuitry such as, but not limited to, one or more processors, one or more Central Processing Units (CPUs), one or more microcontrollers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

In the following description, illustrative embodiments may be described with reference to acts and symbolic representations of operations (for example, in the form of flow charts, flow diagrams, data flow diagrams, structure diagrams, block diagrams, and so forth) that may be implemented as program modules or functional processes including routines, programs, objects, data structures, and so forth, that perform particular tasks or implement particular abstract data types. The operations be implemented using existing hardware in existing electronic systems, such as one or more microprocessors, Central Processing Units (CPUs), digital signal processors (DSPs), application-specific-integrated-circuits (ASICs), SoCs, field programmable gate arrays (FPGAs), computers, or the like.

One or more example embodiments may be (or include) hardware, firmware, hardware executing software, or any combination thereof. Such hardware may include one or more microprocessors, CPUs, SoCs, DSPs, ASICs, FPGAs, computers, or the like, configured as special purpose machines to perform the functions described herein as well as any other well-known functions of these elements. In at least some cases, CPUs, SoCs, DSPs, ASICs and FPGAs may generally be referred to as processing circuits, processors and/or microprocessors.

Although processes may be described with regard to sequential operations, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, and so forth. When a process corresponds to a function, its termination may correspond to a return of the function to the calling function or the main function.

As disclosed herein, the term "storage medium", "computer readable storage medium" or "non-transitory computer readable storage medium," may represent one or more devices for storing data, including read only memory (ROM), random access memory (RAM), magnetic RAM, core memory, magnetic disk storage mediums, optical storage mediums, flash memory devices and/or other tangible machine readable mediums for storing information. The term "computer-readable medium" may include, but is not limited to, portable or fixed storage devices, optical storage devices, and various other mediums capable of storing, containing or carrying instructions and/or data.

Furthermore, at least some portions of example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, processors, processing circuits, or processing units may be programmed to perform the necessary tasks, thereby being transformed into special purpose processors or computers.

A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, and so forth may be passed, forwarded, or transmitted via any suitable means including memory sharing, message passing, token passing, network transmission, and so forth.

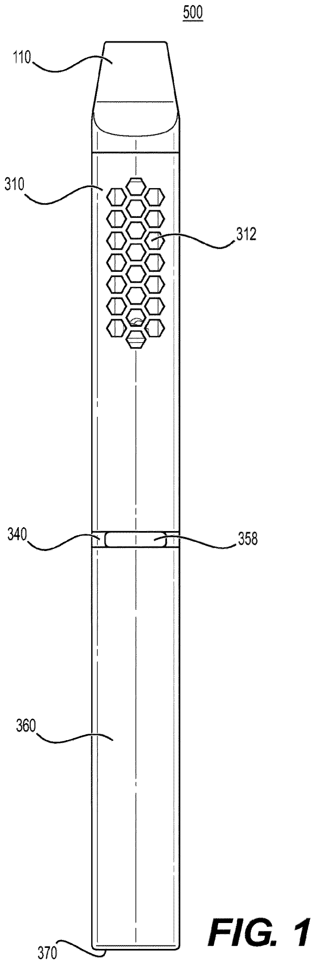

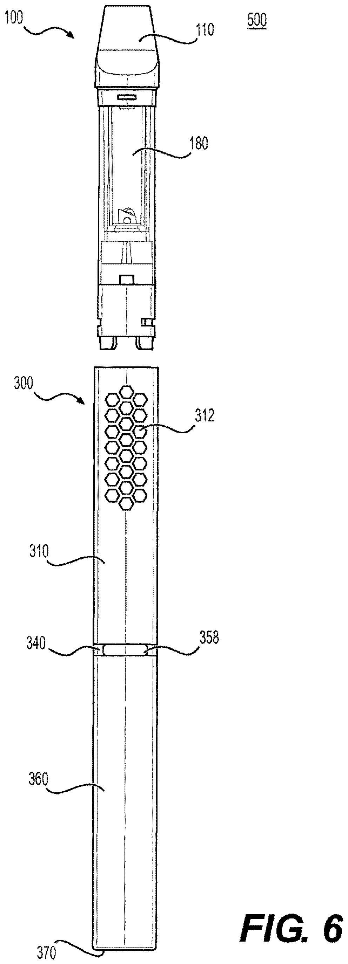

FIG. 1 is a front view of a nicotine e-vaping device according to an example embodiment. Referring the FIG. 1, a nicotine e-vaping device 500 may include a sleeve section 310 configured to receive a nicotine cartridge 100 (discussed in more detail below with respect to FIG. 6). The sleeve section 310 is connected to a battery section housing 360 via a knurled connector 340. A light pipe 358 may be exposed by the knurled connector 340 such that the exposed surface of the light pipe 358 constitutes an external surface of the nicotine e-vaping device 500. The exposed surface of the light pipe 358 may also be between the sleeve section 310 and the battery section housing 360. The combination of at least the sleeve section 310 and the battery section housing 360 may be collectively regarded as the device housing of the nicotine e-vaping device 500. When the nicotine e-vaping device 500 is fully assembled/engaged, a mouthpiece 110 is disposed at the proximal end of the sleeve section 310, while an end cap 370 is disposed at the distal end of the battery section housing 360. The mouthpiece 110 (part of the nicotine cartridge 100) may have a tapered form such that the width at its proximal end is less than the diameter of the sleeve section 310.

The proximal end and the distal end of the nicotine e-vaping device 500 (and/or its constituent parts) may also be referred to as the downstream end and the upstream end, respectively. In particular, as used herein, "proximal" (and, conversely, "distal") is in relation to an adult vaper during vaping, and "downstream" (and, conversely, "upstream") is in relation to a flow of the nicotine vapor.

The sleeve section 310 defines a plurality of air inlets 312. As illustrated, each of the air inlets 312 may have a hexagonal shape and may be arranged in a staggered array so as to resemble a honeycomb pattern. However, it should be understood that other shapes and arrangements are possible. For instance, in lieu of (or in addition to) a hexagonal shape, the air inlets 312 may include triangular, quadrilateral (for example, square, diamond), pentagonal, and/or circular shapes. Furthermore, instead of an axial arrangement along a partial length of the sleeve section 310, the air inlets 312 may be arrayed in a circumferential arrangement around the sleeve section 310. In an example embodiment, the nicotine e-vaping device 500 may include at least ten total air inlets 312 (for example, at least twenty total air inlets 312).

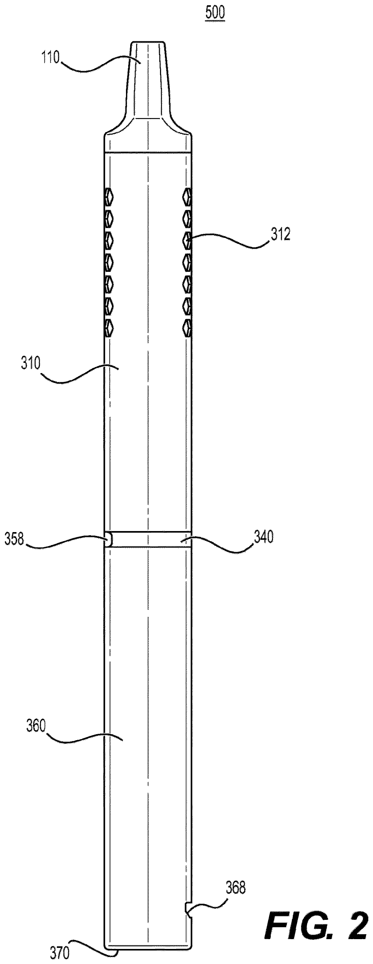

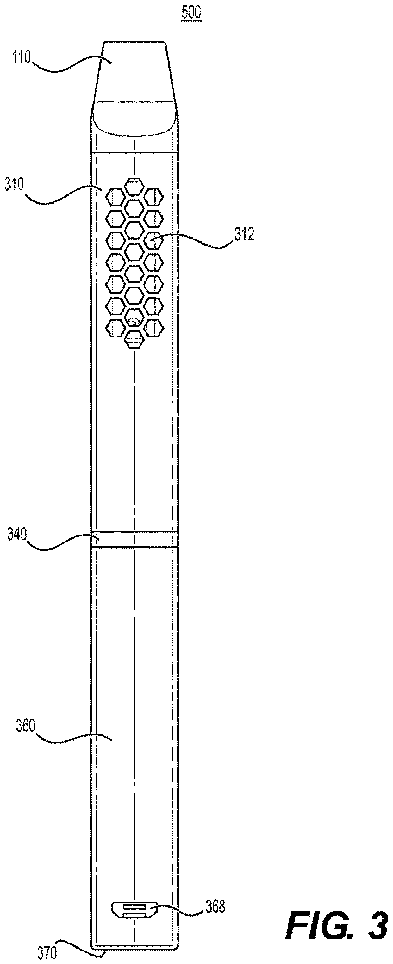

FIG. 2 is a side view of the nicotine e-vaping device of FIG. 1. Referring to FIG. 2, opposite sides of the sleeve section 310 may define a first array of the air inlets 312 and a second array of the air inlets 312 such that both arrays are partially visible in the side view. In an example embodiment, the first array of the air inlets 312 is fully visible based on a front view of the sleeve section 310 as shown in FIG. 1, while the second array of the air inlets 312 is fully visible based on a rear view of the sleeve section 310 as shown in FIG. 3, which is discussed below.

The mouthpiece 110 may have a wedge-like or chisel-like appearance based on the side view of FIG. 2. However, it should be understood that other shapes and configurations are possible. For example, in one instance, the mouthpiece 110 may instead have a cylindrical form. In another instance, the mouthpiece 110 may have a frustoconical form or shape of a truncated cone.

A port 368 may be disposed near the distal end of the battery section housing 360 so as to be adjacent to the end cap 370. In the side view of FIG. 2, the port 368 may be visible as just a recess in the battery section housing 360. In an example embodiment, the port 368 facilitates the charging of and/or communication of information to/from the nicotine e-vaping device 500. The port 368 will be discussed in more detail in connection with FIG. 3.

The light pipe 358 is configured to transmit light emitted from at least one internal light source (for example, LED) so as to provide one or more visual indications. In particular, the light transmitted by the light pipe 358 may visually notify an adult vaper of a state of the nicotine e-vaping device 500. For instance, the visual indications by the light pipe 358 may include (but are not limited to) the following information: whether the nicotine e-vaping device 500 is on, whether nicotine vapor is being generated, whether the battery is low, whether charging is taking place or completed, and/or whether the nicotine pre-vapor formulation is low or depleted.

As referred to herein, a nicotine pre-vapor formulation is a material or combination of materials that may be transformed into a nicotine vapor. For example, the nicotine pre-vapor formulation may include a liquid, solid, and/or gel formulation. These may include, for example and without limitation, water, oil, emulsions, beads, solvents, active ingredients, ethanol, plant extracts, nicotine, natural or artificial flavors, vapor formers such as glycerin and propylene glycol, and/or any other ingredients that may be suitable for vaping. During vaping, the nicotine e-vaping device 500 is configured to heat the nicotine pre-vapor formulation to generate a nicotine vapor. Nicotine vapor, nicotine aerosol, and nicotine dispersion can be used interchangeably and refer to the matter generated or outputted by the devices disclosed, claimed, and/or equivalents thereof, wherein such matter may contain nicotine. In an example embodiment, the nicotine e-vaping device 500 may be regarded as an electronic nicotine delivery system (ENDS).

Referring back to FIG. 2, the light pipe 358 may be on an opposite side of the nicotine e-vaping device 500 from the port 368. However, it should be understood that example embodiments are not limited thereto. For instance, in some embodiments, the light pipe 358 may be on the same side of the nicotine e-vaping device 500 as the port 368 (for example, rear side of the nicotine e-vaping device 500). Conversely, in other embodiments, the port 368 may be on the same side of the nicotine e-vaping device 500 as the light pipe 358 (for example, front side of the nicotine e-vaping device 500).

FIG. 3 is a rear view of the nicotine e-vaping device of FIG. 1. Referring to FIG. 3, the second array of air inlets 312 in the rear side of the nicotine e-vaping device 500 may be as described in connection with the first array of air inlets 312 in the front side of the nicotine e-vaping device 500 shown in FIG. 1. Therefore, the relevant disclosures of the air inlets 312 already discussed above will not be repeated in the interest of brevity. However, in some embodiments, the second array of air inlets 312 in the rear side of the nicotine e-vaping device 500 shown in FIG. 3 may be different from the first array of air inlets 312 in the front side of the nicotine e-vaping device 500 shown in FIG. 1 (or vice versa). For instance, instead of the three staggered rows of seven, eight, and seven air inlets 312 per array, the number of rows and/or the number of air inlets 312 per array may be modified so as to depart from the twenty-two air inlets 312 per array (or the forty-four total air inlets 312 for the nicotine e-vaping device 500).

The port 368 is configured to receive an electric current (for example, via a USB/mini-USB/USB-C cable) from an external power source so as to charge an internal power source within the nicotine e-vaping device 500. In addition, the port 368 may also be configured to send data to and/or receive data (for example, via a USB/mini-USB/USB-C cable) from another nicotine e-vaping device or other electronic device (for example, phone, tablet, computer). Furthermore, the nicotine e-vaping device 500 may be configured for wireless communication with another electronic device, such as a phone, via an application software (app) installed on that electronic device. In such an instance, an adult vaper may control or otherwise interface with the nicotine e-vaping device 500 (for example, locate the nicotine e-vaping device, check usage information, change operating parameters) through the app.

Although the port 368 is shown as being located on the rear side of the nicotine e-vaping device 500 in FIG. 3, it should be understood that other locations are also possible. For instance, in some embodiments, the port 368 may be located instead on the front side of the nicotine e-vaping device 500 in FIG. 1. Additionally, in other embodiments, the port 368 may be located on the distal end of the nicotine e-vaping device 500 so as to be accessible through the end cap 370.

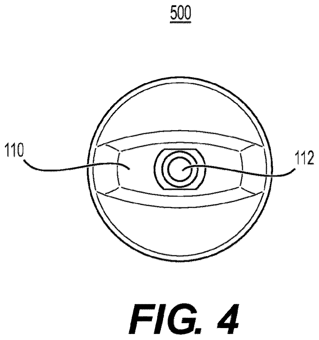

FIG. 4 is a proximal end view of the nicotine e-vaping device of FIG. 1. Referring to FIG. 4, the mouthpiece 110 defines a vapor outlet 112. During vaping, the nicotine vapor generated is drawn from the nicotine e-vaping device 500 through the vapor outlet 112. Although the vapor outlet 112 is shown as being centered so as to coincide with a central longitudinal axis of the nicotine e-vaping device 500, it should be understood that the vapor outlet 112 may be off-centered (for example, offset from the central longitudinal axis) in some instances. Additionally, although only one vapor outlet 112 is shown in FIG. 4, it should be understood that example embodiments are not limited thereto. In particular, in some embodiments, the mouthpiece 110 may define a plurality of vapor outlets 112. For instance, the mouthpiece 110 may define two vapor outlets 112, which may extend in parallel (for example, longitudinally) or in a diverging manner. In another instance, the mouthpiece 110 may define three vapor outlets 112. In such an embodiment, the three vapor outlets 112 may be aligned in a linear arrangement such that a vapor outlet 112 in the middle extends longitudinally while the other two vapor outlets 112 extend in a diverging manner. Alternatively, all three vapor outlets 112 may extend in parallel.

It should also be understood that the positioning, arrangement, and quantity of the one or more vapor outlets 112 may be further varied depending on the configuration of the mouthpiece 110. In particular, in example embodiments where the mouthpiece 110 has a cylindrical form or a frustoconical form (instead of a flattened form), additional options may exist for the positioning, arrangement, and quantity of the one or more vapor outlets 112. For instance, when space permits, an embodiment with three vapor outlets 112 may have a triangular arrangement for the vapor outlets 112. Similarly, an embodiment with four vapor outlets 112 may have a triangular arrangement with a central vapor outlet 112 or, alternatively, a quadrilateral (for example, square, diamond) arrangement. Likewise, an embodiment with more vapor outlets 112 may have a quadrilateral arrangement, a pentagonal arrangement, a hexagonal arrangement, a heptagonal arrangement, or an octagonal arrangement, which may or may not include a central vapor outlet 112.

As shown in the drawings, the nicotine e-vaping device 500 may have a generally cylindrical form and a circular cross-section. Alternatively, the nicotine e-vaping device 500 may have a generally polyhedron form with a polygonal cross-section. The selection of the general overall form of the nicotine e-vaping device 500 make take into account various factors, including (but not limited to) aesthetics, functionality, and manufacturing considerations. For instance, instead of a cylindrical form, the nicotine e-vaping device 500 may have a polyhedron form to provide a more contemporary look and/or to prevent or reduce the likelihood of unwanted rolling (for example, anti-roll design).

A polyhedron form for the nicotine e-vaping device 500 may include a triangular prism, a cuboid, a pentagonal prism, a hexagonal prism, a heptagonal prism, or an octagonal prism. With a form resembling a triangular prism, the nicotine e-vaping device 500 may have a triangular cross-section (for example, shape of an equilateral triangle). With a form resembling a cuboid, the nicotine e-vaping device 500 may have a square cross-section or a rectangular cross-section. With a form resembling a pentagonal prism, the nicotine e-vaping device 500 may have a pentagonal cross-section. With a form resembling a hexagonal prism, the nicotine e-vaping device 500 may have a hexagonal cross-section. With a form resembling a heptagonal prism, the nicotine e-vaping device 500 may have a heptagonal cross-section. With a form resembling an octagonal prism, the nicotine e-vaping device 500 may have an octagonal cross-section.

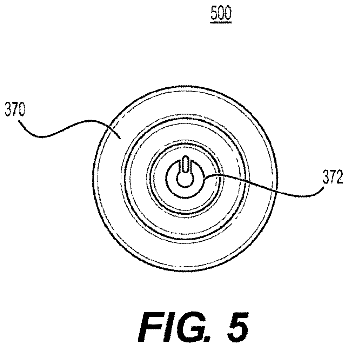

FIG. 5 is a distal end view of the nicotine e-vaping device of FIG. 1. Referring to FIG. 5, an end cap 370 and a button 372 are disposed at the distal end of the nicotine e-vaping device 500. The end cap 370 may be engaged with the battery section housing 360 via an interference fit (which may also be referred to as a press fit or friction fit). For instance, the outer sidewall of the end cap 370 may be engaged with the corresponding inner sidewall of the battery section housing 360. Additionally, the outer sidewall of the end cap 370 may be knurled to enhance the engagement. In an example embodiment, the end cap 370 also defines an opening configured to accommodate the button 372. In such an instance, the end cap 370 is a stationary structure, while the button 372 is a mobile structure which is movable (for example, depressible) relative to the end cap 370.

The button 372 may be a power button for the nicotine e-vaping device 500. In particular, when pressed, the button 372 may activate a power supply within the nicotine e-vaping device 500. Although the button 372 is shown as being located at the distal end of the nicotine e-vaping device 500, it should be understood that example embodiments are not limited thereto. For instance, in some embodiments, the button 372 may be located instead on the front of the nicotine e-vaping device 500 (for example, so as to be on the same side as the light pipe 358).

FIG. 6 is a front view of the nicotine e-vaping device of FIG. 1 when the nicotine cartridge and the device body are not engaged. Referring to FIG. 6, the nicotine e-vaping device 500 includes a nicotine cartridge 100 and a device body 300, wherein the device body 300 is configured to receive the nicotine cartridge 100. The nicotine cartridge 100 includes a housing configured to hold a nicotine pre-vapor formulation 180. When the nicotine cartridge 100 is engaged with the device body 300, a majority of the nicotine cartridge 100 may be hidden from view by the sleeve section 310 while the mouthpiece 110 remains visible (for example, as shown in FIG. 1). The nicotine pre-vapor formulation 180 within the nicotine cartridge 100 may also be visible through the device body 300 via the air inlets 312 in the sleeve section 310. During vaping, the nicotine pre-vapor formulation 180 is heated to generate a nicotine vapor which is drawn from the nicotine e-vaping device 500 via the mouthpiece 110.

The nicotine cartridge 100 may be regarded as a consumable which is replaced once the nicotine pre-vapor formulation 180 therein is depleted. The level of the nicotine pre-vapor formulation 180 within the nicotine cartridge 100 may be visually ascertained through the air inlets 312 in the sleeve section 310. In some instances, the nicotine e-vaping device 500 may additionally provide a notification (for example, via the light pipe 358) when the nicotine pre-vapor formulation 180 within the nicotine cartridge 100 is deemed depleted. In other instances, the nicotine e-vaping device 500 may also provide an indication (for example, via the light pipe 358) that another unacceptable condition exists. Examples of other unacceptable conditions include (but are not limited to) a poor electrical connection and/or an unauthorized nicotine cartridge or an authorized nicotine cartridge that is no longer deemed appropriate for vaping (for example, an overly long period of time, such as a year, has passed since vaping first occurred with the nicotine cartridge).

The form of the device body 300 may correspond to the form of the nicotine cartridge 100 (for example, generally cylindrical form for both the device body 300 and the nicotine cartridge 100). However, in other instances, the form of the device body 300 may be different from the form of the nicotine cartridge 100. For instance, the nicotine cartridge 100 may have a cylindrical form, while the device body 300 may have one of the different forms disclosed herein (for example, cuboid form) or vice versa. Therefore, the nicotine e-vaping device 500 may have an overall form (which is influenced primarily by the device body 300) that is different from the form of the nicotine cartridge 100.

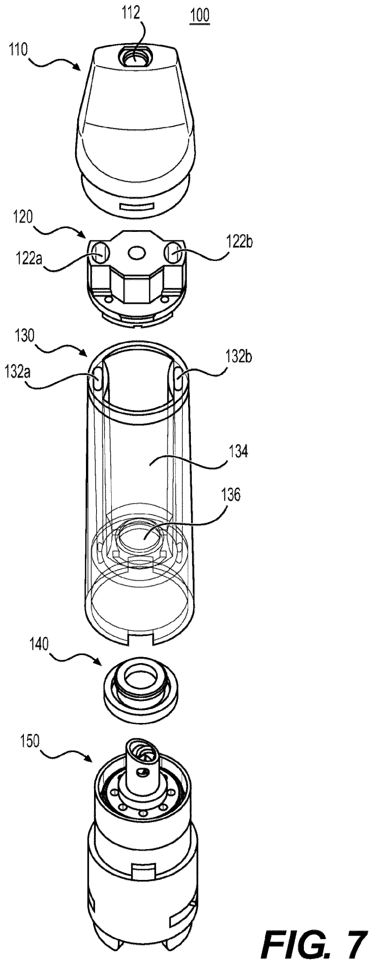

FIG. 7 is an exploded view of the nicotine cartridge in FIG. 6. Referring to FIG. 7, the nicotine cartridge 100 includes a mouthpiece 110, a first seal 120, a tank 130, a second seal 140, and a vaporizer 150. The tank 130 defines a reservoir 134 configured to hold a nicotine pre-vapor formulation 180 when the nicotine cartridge 100 is assembled. In addition, the sidewall of the tank 130 may define at least one vapor channel extending therethrough. As illustrated, the sidewall of the tank 130 defines vapor channels 132a and 132b (which may also be referred to as first vapor channel 132a and second vapor channel 132b). In an example embodiment, the vapor channels 132a and 132b may be defined within opposite sides of the sidewall of the tank 130 (for example, diametrically opposed) such that the reservoir 134 is between the vapor channels 132a and 132b. The vapor channels 132a and 132b may also be parallel to each other and to a longitudinal axis of the tank 130. The tank 130 may be formed of a transparent material to permit a viewing of the contents therein (for example, nicotine pre-vapor formulation 180).

The first seal 120 and the second seal 140 are configured to seal or close off the reservoir 134. The first seal 120 defines apertures 122a and 122b (which may also be referred to as first aperture 122a and second aperture 122b). As a result, when the first seal 120 is engaged with the tank 130 to seal the proximal side of the reservoir 134, the apertures 122a and 122b will be aligned with the vapor channels 132a and 132b, respectively. With such an engagement, the nicotine vapor generated by the vaporizer 150 during vaping can travel up the vapor channels 132a and 132b and through the apertures 122a and 122b, respectively, to the mouthpiece 110 and out the vapor outlet 112. When the nicotine cartridge 100 is assembled, the first seal 120 may be obscured from view by the mouthpiece 110 (which also engages with the tank 130). Additionally, the first seal 120 may be formed of or include a resilient material of construction (for example, silicone).

The second seal 140 is configured to engage with the tank 130 to seal the distal side of the reservoir 134. In particular, the second seal 140 is configured to seal the distal side of the reservoir 134 by closing off the opening 136 the tank 130. In an example embodiment, the second seal 140 is formed of a resilient material (for example, silicone) and includes a head portion, a body portion, and a neck portion between the head portion and the body portion. The diameter of the head portion of the second seal 140 is larger than the diameter of the opening 136 and smaller than the diameter of the body portion of the second seal 140, while the diameter of the neck portion of the second seal 140 may correspond to the diameter of the opening 136. As a result, when the head portion of the second seal 140 is urged through the opening 136 in the tank 130, the neck portion of the second seal 140 can be resiliently seated in the opening 136 in a liquid-tight manner, while the head portion of the second seal 140 is within the reservoir 134 and the body portion of the second seal 140 is outside the reservoir 134. In such an instance, by gripping the opposing surfaces of the tank 130 defining the opening 136, the head portion and the body portion of the second seal 140 can help to ensure that the second seal 140 provides the desired sealing while maintaining its proper positioning.

Therefore, the first seal 120 and the second seal 140 are configured to engage the tank 130 such that the reservoir 134 is sealed and isolated from the vapor channels 132a and 132b. The combination of the first seal 120, the tank 130, and the second seal 140 may also be collectively referred to as a housing of the nicotine cartridge 100. In an example embodiment, the second seal 140 may be configured as a puncturable structure that completely covers the opening 136 in the tank 130 (when in an unpunctured/unpierced state). In such an embodiment, the reservoir 134 may remain sealed until the vaporizer 150 is received by and engaged with the tank 130 (for example, during assembly, before vaping) such that the tip of the vaporizer 150 pierces the second seal 140 and extends through the opening 136 and into the reservoir 134 to access the nicotine pre-vapor formulation 180 therein (for example, as shown in FIG. 6).

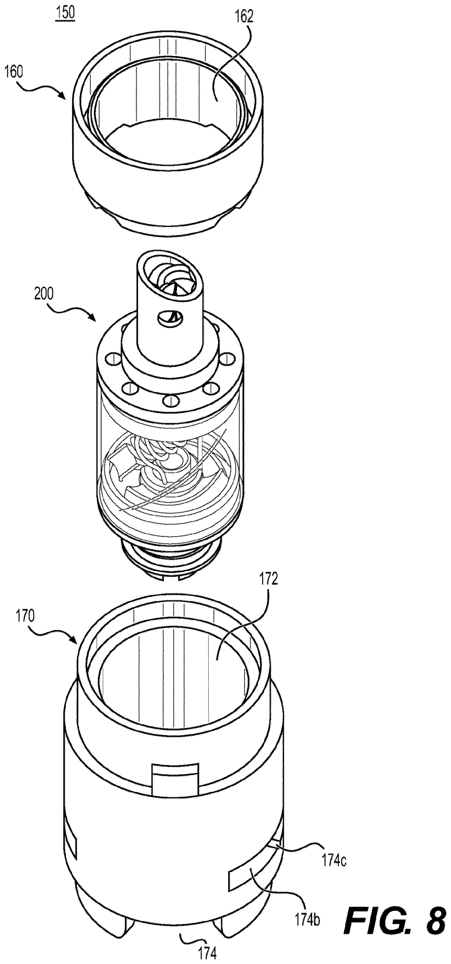

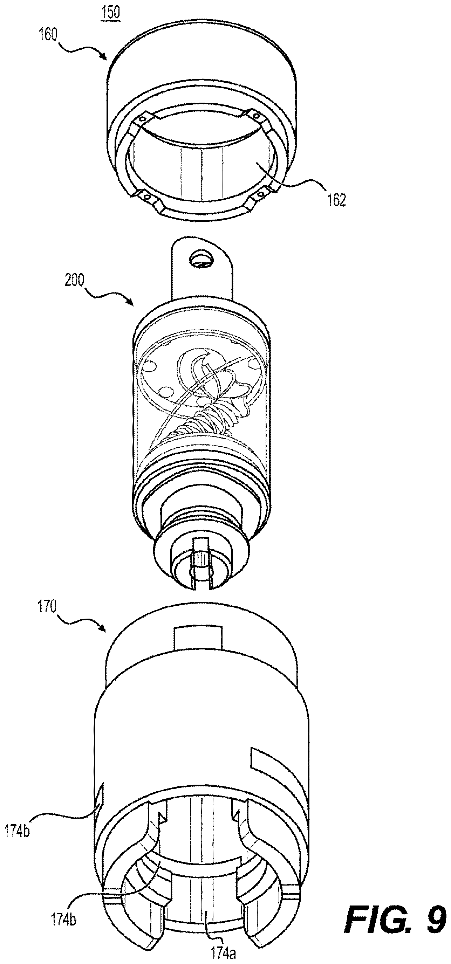

FIG. 8 is a first exploded view of the vaporizer in FIG. 7. FIG. 9 is a second exploded view of the vaporizer in FIG. 7. Referring to FIGS. 8-9, the vaporizer 150 includes a vaporizing module 200, which may be held at least partly within a catch ring 160 and a bayonet connector 170. The catch ring 160 defines an opening 162 configured to accommodate the vaporizing module 200. Similarly, the bayonet connector 170 defines an opening 172 configured to receive the vaporizing module 200. When the vaporizer 150 is assembled, the catch ring 160 will engage with the bayonet connector 170 so as to surround and hold the vaporizing module 200. Additionally, the tip or piercing portion of the vaporizing module 200 will protrude beyond the rim of the catch ring 160, while the remaining portion of the vaporizing module 200 will be substantially or completely hidden from view within the bayonet connector 170 depending on the angle. In an example embodiment, the vaporizing module 200 may be retained by/within the catch ring 160 and the bayonet connector 170 via an interference fit.

The bayonet connector 170 (which is part of the vaporizer 150 and, therefore, part of the nicotine cartridge 100) facilitates a connection between the nicotine cartridge 100 and the device body 300. As illustrated in FIGS. 8-9, the bayonet connector 170 defines a pair of slots 174 each configured to receive a corresponding engagement member. Each of the slots 174 includes a longitudinal portion 174a and a circumferential portion 174b. Additionally, the circumferential portion 174b may include a furrow 174c to help retain a corresponding engagement member. The establishment of a bayonet connection between the nicotine cartridge 100 and the device body 300 will be discussed in more detail herein.

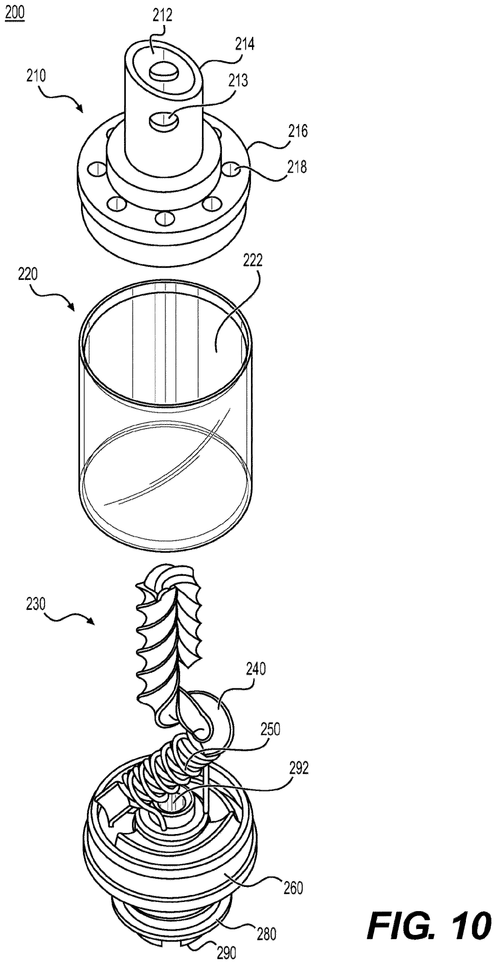

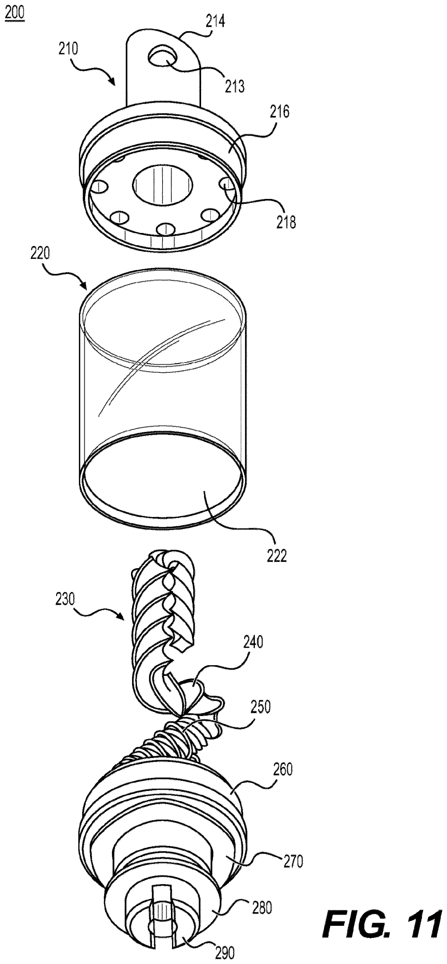

FIG. 10 is an exploded view of the vaporizing module in FIG. 8. FIG. 11 is an exploded view of the vaporizing module in FIG. 9. Referring to FIGS. 10-11, the vaporizing module 200 includes a first module cover 210, a module housing 220, and a heater-wick subassembly 230. The module housing 220 defines a chamber 222, which may also be referred to as a heating chamber or a vaporization chamber. In an example embodiment, the module housing 220 may be formed of a transparent material to permit a viewing of the contents within the chamber 222. The first module cover 210 is configured to engage with a proximal end of the module housing 220. The heater-wick subassembly 230 is configured to engage with the opposing distal end of the module housing 220. In this manner, the open ends of the module housing 220 may be bounded (for example, capped) by the first module cover 210 and the heater-wick subassembly 230.

The first module cover 210 includes a cap portion 216 and a piercing portion 214 that protrudes from the cap portion 216. The cap portion 216 of the first module cover 210 defines a plurality of apertures 218, which may be evenly spaced from each other and disposed as a circular arrangement around the piercing portion 214. In an example embodiment, the cap portion 216 defines eight apertures 218. However, it should be understood that the quantity, shape, and/or arrangement of the apertures 218 in the cap portion 216 may be varied as appropriate to achieve the desired passage of the aerosol therethrough from the chamber 222. For instance, in the alternative, the cap portion 216 may define only two apertures 218, wherein each has an elongated shape and is arranged in a diametrically opposed manner so as to be aligned with the vapor channels 132a and 132b in the tank 130 when the vaporizer 150 is engaged with the tank 130. With regards to assembling the vaporizing module 200, the cap portion 216 of the first module cover 210 has an outer side surface configured to engage with a corresponding inner side surface of the module housing 220.

The piercing portion 214 defines an orifice 212 which may extend longitudinally through the first module cover 210. For instance, the orifice 212 in the piercing portion 214 may coincide with a central longitudinal axis of the first module cover 210. In addition, the piercing portion 214 defines holes 213 in its sidewall. The holes 213 may be regarded as extending transversely through the piercing portion 214 so as to be orthogonal to the orifice 212. Although a pair of holes 213 are illustrated in FIG. 10, it should be understood that example embodiments are not limited thereto. For instance, the piercing portion 214 may instead define a different number (for example, three, four) of holes 213 in its sidewall. Furthermore, the piercing portion 214 may have an angled proximal surface that tapers to a pointed end or tip so as to facilitate an insertion of the piercing portion 214 through the second seal 140, through the opening 136 in the tank 130, and into the reservoir 134. When the vaporizer 150 is in fluidic communication with the reservoir 134, the nicotine pre-vapor formulation 180 enters the vaporizing module 200 via the orifice 212 and/or the holes 213 in the piercing portion 214.

The heater-wick subassembly 230 includes a second module cover 260 which may function as a base or support for the other parts of the heater-wick subassembly 230. As a result, the other parts of the heater-wick subassembly 230 may be mounted or secured to the second module cover 260 in an integrated manner. In an example embodiment, the second module cover 260 may be formed of a conductive material. For instance, the conductive material may include steel (for example, 304 stainless steel). With regards to assembling the vaporizing module 200, the second module cover 260 has an outer side surface configured to engage with a corresponding inner side surface of the module housing 220.

The heater-wick subassembly 230 additionally includes a wick 240 configured to draw or transport the nicotine pre-vapor formulation 180 from the reservoir 134 into the vaporizing module 200. The wick 240 may be a fibrous structure with pores/interstices designed for capillary action. In an example embodiment, the wick 240 may have a cord-like form wherein strands of fiber are braided, twisted, and/or woven together. When the vaporizing module 200 is assembled, a proximal portion of the wick 240 may extend into the first module cover 210, while a distal portion of the wick 240 may be supported/held by the second module cover 260.

For instance, the proximal portion of the wick 240 may be disposed within the piercing portion 214 of the first module cover 210 so as to substantially occupy the orifice 212 (for example, FIG. 8), therefore helping to modulate a supply of the nicotine pre-vapor formulation 180 from the reservoir 134. As a result, the possibility of the nicotine pre-vapor formulation 180 flowing in excess into the chamber 222 (via the orifice 212 and/or the holes 213) may be reduced or prevented. Instead, the nicotine pre-vapor formulation 180 may be drawn into the chamber 222 substantially on an as needed basis. In particular, when the nicotine pre-vapor formulation 180 within the wick 240 is heated to generate a nicotine vapor (and, therefore, depleted) during vaping, the wick 240 will draw additional nicotine pre-vapor formulation 180 from the reservoir 134 to replenish the nicotine pre-vapor formulation 180 depleted within the wick 240. The nicotine pre-vapor formulation 180 from the reservoir 134 may enter the first module cover 210 through the orifice 212 and/or the holes 213 before being drawn into the wick 240 via capillary action. On the other hand, when vaping is not occurring, the drawing of the nicotine pre-vapor formulation 180 from the reservoir 134 by the wick 240 may slow or stop once the wick 240 is saturated. In addition, a seepage of the nicotine pre-vapor formulation 180 into the apertures 218 may be reduced or prevented by the engagement of the first module cover 210 and the second seal 140.

An integral heater-thermocouple 250 is arranged so as to be in thermal contact with the wick 240. The nicotine e-vaping device 500 is configured such that the integral heater-thermocouple 250 will be activated during vaping to heat the nicotine pre-vapor formulation 180 in the wick 240 to generate a nicotine vapor. The integral heater-thermocouple 250 may be designed to undergo Joule heating (which is also known as ohmic/resistive heating) upon the application of an electric current thereto. Stated in more detail, the integral heater-thermocouple 250 may be formed of conductors (resistive materials) and configured to produce heat when an electric current passes therethrough. The electric current may be supplied from a power source (for example, battery) within the device body 300.

The integral heater-thermocouple 250 is in a form of a helical coil that wraps (for example, spirals) around the wick 240. For example, the integral heater-thermocouple 250 may wrap around a lower portion of the wick 240 (for example, around a portion of the wick 240 not protruding into the piercing portion 214). Additionally, in such an instance, the integral heater-thermocouple 250 may be oriented such that the axis of its helix is at an angle (for example, neither parallel nor orthogonal) relative to the longitudinal axis of the vaporizing module 200. The integral heater-thermocouple 250 will be discussed in more detail herein.

As shown in FIG. 11, a first electrical contact 270 may be disposed on an upstream side of the second module cover 260. When assembled, the distal end of the second module cover 260 extends through an opening defined by the first electrical contact 270. In an example embodiment, the first electrical contact 270 is structured as a washer with an undulated or wavelike form. The first electrical contact 270 may be covered with gold plating. For instance, the first electrical contact 270 may have an interior (underlying structure) formed of steel (for example, spring steel) and an exterior formed of gold (for example, as a deposited layer).

A second electrical contact 290 may be disposed at the distal end of the heater-wick subassembly 230 while extending through the first electrical contact 270 and the second module cover 260. In an example embodiment, the second electrical contact 290 may be covered with gold plating. For instance, the second electrical contact 290 may have an interior (underlying structure) formed of brass and an exterior formed of gold (for example, as a deposited layer). The second electrical contact 290 also defines a passage 292 which allows an airflow into the chamber 222.

When the heater-wick subassembly 230 is assembled, a first end of the integral heater-thermocouple 250 may be electrically connected to the second module cover 260/first electrical contact 270, while the second end of the integral heater-thermocouple 250 may be electrically connected to the second electrical contact 290. An insulator 280 electrically isolates the second electrical contact 290 from the second module cover 260/first electrical contact 270. In an example embodiment, the insulator 280 is structured as a grommet with a sheath-like form that receives the second electrical contact 290 and extends through the second module cover 260/first electrical contact 270. Additionally, in such an instance, the first end of the integral heater-thermocouple 250 may be secured between the second module cover 260 and the insulator 280, while the second end of the integral heater-thermocouple 250 may be secured between the insulator 280 and the second electrical contact 290.

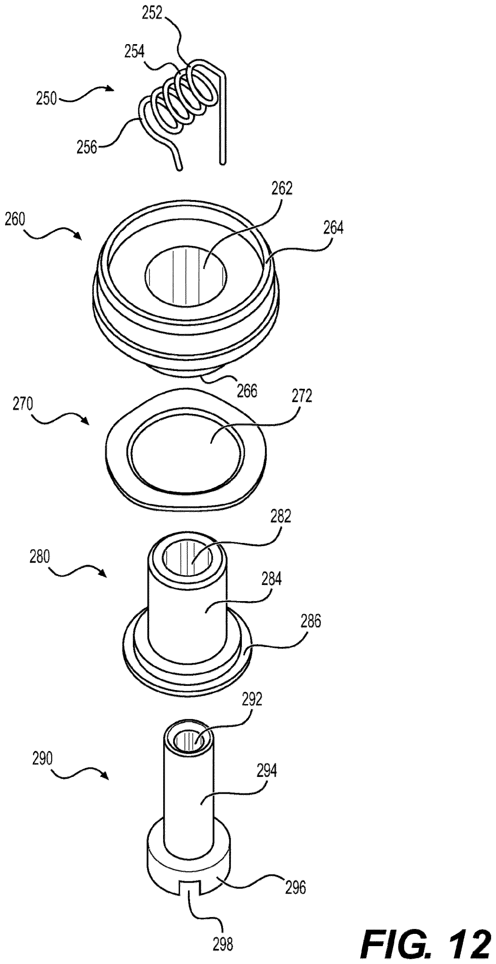

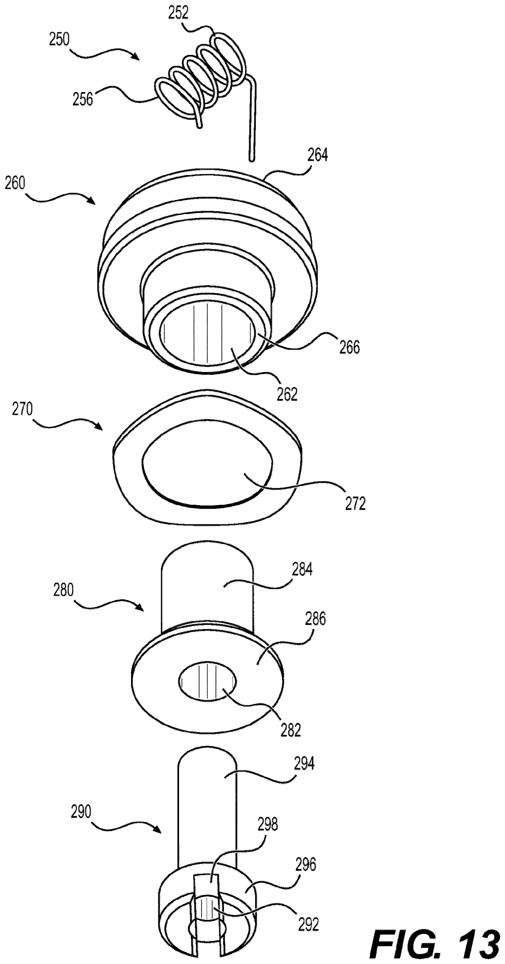

FIG. 12 is an exploded view of the heater subassembly in FIG. 10. FIG. 13 is an exploded view of the heater subassembly in FIG. 11. In particular, the heater subassembly is the heater-wick subassembly 230 without the wick 240. Referring to FIGS. 12-13, the integral heater-thermocouple 250 includes a first segment 252 and a second segment 256. The first segment 252 and the second segment 256 are connected at a junction 254 (which may also be referred to as a "hot" junction). Additionally, the first segment 252 is made of a first alloy, and the second segment 256 is made of a second alloy (that is different from the first alloy).

As the integral heater-thermocouple 250 is in a form of a helical structure (that is wrapped around the wick 240), the helical structure includes a plurality of coils. In such an instance, the plurality of coils includes at least one coil corresponding to the first segment 252 and at least one coil corresponding to the second segment 256. As a result, the at least one coil of the first segment 252 is made of the first alloy, and the at least one coil of the second segment 256 is made of the second alloy. Additionally, the at least one coil of the first alloy may be welded to the at least one coil of the second alloy at a junction 254.

The plurality of coils of the integral heater-thermocouple 250 may be in a form of five to ten total coils (for example, six to nine total coils). For instance, the first segment 252 of the integral heater-thermocouple 250 may include one coil of the first alloy, and the second segment 256 may include five coils of the second alloy. Alternatively, the first segment 252 of the integral heater-thermocouple 250 may include two coils of the first alloy, and the second segment 256 may include four coils of the second alloy.

With regard to orientation, the vaporizing module 200 may be regarded as including a housing having a first longitudinal axis, and the helical structure of the integral heater-thermocouple 250 may be regarded as having a second longitudinal axis that intersects the first longitudinal axis to form an oblique angle. In such an instance, the at least one coil of the first segment 252 (which is made of the first alloy) is downstream from the at least one coil of the second segment 256 (which is made of the second alloy).

According to an example embodiment, the first alloy is a nickel-aluminum alloy, and the second alloy is a nickel-chromium alloy. For instance, the nickel-aluminum alloy may include 95 percent nickel and 2 percent aluminum (for example, Alumel), and the nickel-chromium alloy may include 90 percent nickel and 10 percent chromium (for example, Chromel). With regard to physical properties, the first alloy has a first electrical resistivity and a first thermal conductivity, and the second alloy has a second electrical resistivity and a second thermal conductivity. In an example embodiment, the first electrical resistivity is less than the second electrical resistivity, and the first thermal conductivity is greater than the second thermal conductivity. Additionally, the integral heater-thermocouple 250 may have a Seebeck coefficient of about 35 to 75 µV/°C (for example, 41 µV/°C, 50 µV/°C, 68 µV/°C). Furthermore, the integral heater-thermocouple 250 may have an overall resistance of about 0.5 to 3.5 Ω (for example, 1 Ω).

As noted *above,* the integral heater-thermocouple 250 is configured to undergo Joule heating (which is also known as ohmic/resistive heating) upon the application of an electric current thereto. In addition, the integral heater-thermocouple 250 has a first segment 252 of a first alloy that is connected to a second segment 256 of a second alloy (which is different from the first alloy) at a junction 254. As a result of the dissimilar alloys and the associated thermoelectric effect, a voltage is created when the junction 254 experiences a change in temperature (for example, such as when Joule heating is occurring to generate a nicotine vapor). This voltage is temperature-dependent and therefore can be used to determine the temperature at the junction 254. For instance, the relationship between voltage and temperature may be determined from empirical studies and stored in a lookup table (LUT). In this manner, the integral heater-thermocouple 250 can function as both a heater and a thermocouple.

The second module cover 260 defines an opening 262 and has a proximal rim 264 and a distal rim 266 around the opening 262. As shown in the drawings, the circumference of the proximal rim 264 may be larger than the circumference of the distal rim 266. The proximal rim 264 of the second module cover 260 may help to hold a distal portion of the wick 240 and/or to contain a small quantity of the nicotine pre-vapor formulation 180 that may seep therefrom. In addition, the outer edge of the proximal rim 264 may be beveled to facilitate an engagement with the module housing 220.

The first electrical contact 270 defines an opening 272 and has an annular form which may also be wavelike. During assembly, the first electrical contact 270 is engaged with the second module cover 260 such that the distal rim 266 of the second module cover 260 extends through the opening 272 in the first electrical contact 270. As a result, when assembled, the first electrical contact 270 may be positioned against an underside of the second module cover 260 (for example, via an interference fit with distal rim 266).

The insulator 280 includes a sheath portion 284 and a flange portion 286 and also defines an opening 282 extending therethrough. During assembly, the insulator 280 is inserted through the second module cover 260 (as well as through the first electrical contact 270) such that the outer sidewall of the sheath portion 284 engages with the sidewall of the opening 262 in the second module cover 260. In addition, when assembled, the flange portion 286 of the insulator 280 may abut the distal rim 266 of the second module cover 260.

The second electrical contact 290 includes a shaft portion 294 and a base portion 296 and also defines a passage 292 extending therethrough. When assembled, the second electrical contact 290 extends through the opening 282 in the insulator 280 (as well as through the first electrical contact 270 and the second module cover 260) such that the passage 292 in the second electrical contact 290 leads to the chamber 222 in the vaporizing module 200. Additionally, the base portion 296 of the second electrical contact 290 may abut the flange portion 286 of the insulator 280. As noted *above,* the insulator 280 electrically isolates the second electrical contact 290 from the second module cover 260/first electrical contact 270. Furthermore, the base portion 296 also defines a groove 298 which extends orthogonally to the longitudinal axis of the second electrical contact 290. In an example embodiment and as will be discussed in more detail herein, the groove 298 in the base portion 296 is configured to provide access for inflowing air to enter the passage 292 in the second electrical contact 290 when the nicotine cartridge 100 is engaged with the device body 300.

In the heater subassembly, a first end corresponding to the first segment 252 of the integral heater-thermocouple 250 may be electrically connected to the second module cover 260/first electrical contact 270, while the second end corresponding to the second segment 256 of the integral heater-thermocouple 250 may be electrically connected to the second electrical contact 290. In particular, the first end corresponding to the first segment 252 of the integral heater-thermocouple 250 may be secured between the second module cover 260 and the insulator 280, while the second end corresponding to the second segment 256 of the integral heater-thermocouple 250 may be secured between the insulator 280 and the second electrical contact 290.

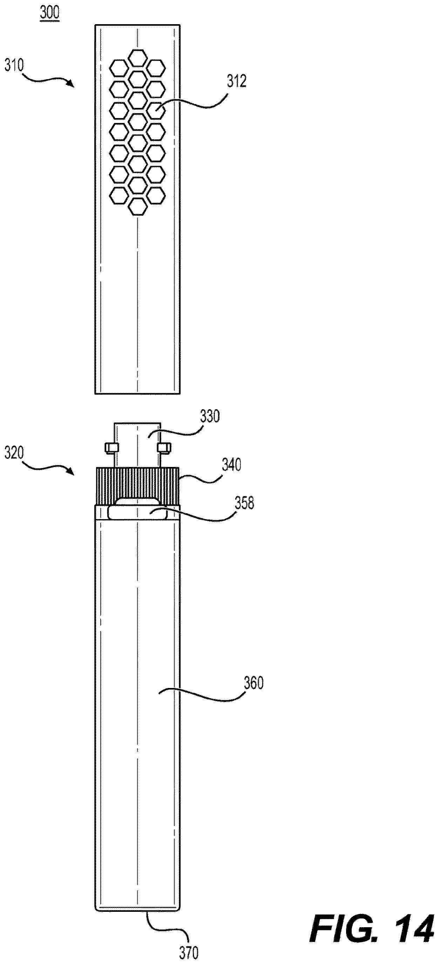

FIG. 14 is a partially-exploded view of the device body in FIG. 6. Referring to FIG. 14, the device body 300 includes a sleeve section 310 and a battery section 320. The sleeve section 310 is configured to receive the nicotine cartridge 100 when the nicotine cartridge 100 is inserted into the device body 300 to engage with the battery section 320. Additionally, as illustrated, the sleeve section 310 defines an array of inlet openings or air inlets 312. The array of inlet openings or air inlets 312 may be in a form of a honeycomb pattern configured to facilitate an intake of ambient air which enters the device body 300 and travels toward the power supply (within the battery section 320) before moving inward and then toward the integral heater-thermocouple 250 in the nicotine cartridge 100.

The battery section 320 includes a bayonet adapter 330 that is configured to engage with the bayonet connector 170 of the nicotine cartridge 100. In particular, to engage the nicotine cartridge 100 with the device body 300, the distal end of the nicotine cartridge 100 (the end of the nicotine cartridge 100 with the bayonet connector 170) is inserted into the sleeve section 310 of the device body 300 until the slots 174 of the bayonet connector 170 initially mate with the engagement members of the bayonet adapter 330. Once the initial mating occurs, the nicotine cartridge 100 can then be turned/twisted/rotated relative to the device body 300 to interlock with the device body 300. As a result, a nicotine e-vaping device 500 may be provided wherein a bayonet connection is established between the nicotine cartridge 100 and the device body 300. The battery section 320 of the device body 300 also includes a knurled connector 340, a light pipe 358, a battery section housing 360, and an end cap 370, which have been discussed *above* in connection with earlier figures. As a result, such descriptions will not be repeated herein in the interest of brevity, although additional details may be subsequently provided herein.

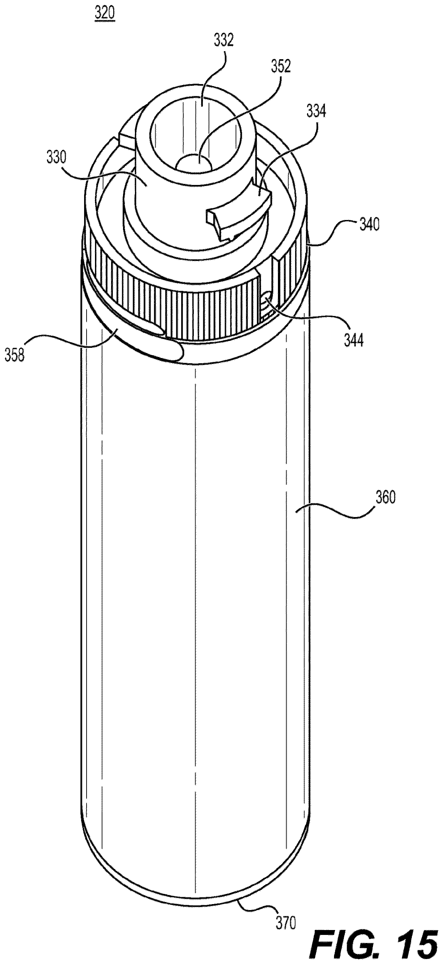

FIG. 15 is a perspective view of the battery section in FIG. 14. Referring to FIG. 15, the bayonet adapter 330 includes at least one engagement member 334 configured to mate/interlock with the bayonet connector 170 of the nicotine cartridge 100. In an example embodiment, the bayonet adapter 330 includes a pair of engagement members 334 which protrude from its outer sidewall. Additionally, the engagement members 334 may be diametrically opposed from each other. The bayonet adapter 330 also defines an opening 332 which exposes (for example, so as to provide access to) a pin 352. The bayonet adapter 330 and the pin 352 of the battery section 320 may be regarded as the electrical contacts of the device body 300. In particular, when the device body 300 is engaged with the nicotine cartridge 100, the bayonet adapter 330 is configured to electrically contact the first electrical contact 270 of the nicotine cartridge 100, while the pin 352 is configured to electrically contact the second electrical contact 290 of the nicotine cartridge 100. The bayonet adapter 330 may be formed of a conductive material such as steel (for example, 304 stainless steel). The pin 352 may be covered with gold plating. For instance, the pin 352 may have an interior (underlying structure) formed of brass and an exterior formed of gold (for example, as a deposited layer).

The knurled connector 340 defines at least one pathway 344 for inflowing air (for example, air flowing inward and en route to the vaporizing module 200). The at least one pathway 344 in the knurled connector 340 is in fluidic communication with the opening 332 in the bayonet adapter 330. In particular, during vaping, air drawn into the nicotine e-vaping device 500 via the air inlets 312 will flow in the annular space between the sleeve section 310 and the nicotine cartridge 100 toward the battery section 320 (for example, in a first longitudinal direction) and then flow inward (for example, in a radial direction) via the at least one pathway 344 in the knurled connector 340 to the opening 332 in the bayonet adapter 330 before flowing through the opening 332 (for example, in a second longitudinal direction) to the vaporing module 200. In an example embodiment, the knurled connector 340 may be covered with chrome plating. For instance, the knurled connector 340 may have an interior (underlying structure) formed of brass and an exterior formed of chrome (for example, as a deposited layer).

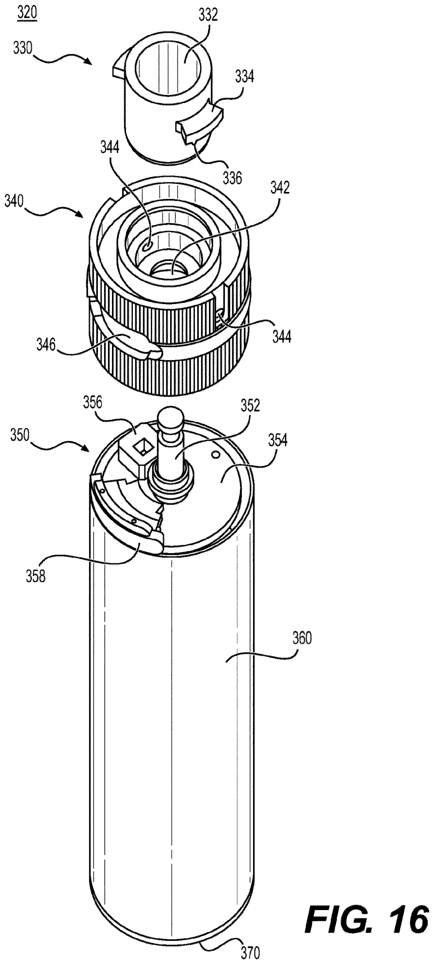

FIG. 16 is a partially-exploded view of the battery section of FIG. 15. Referring to FIG. 16, the dimensions of the engagement members 334 of the bayonet adapter 330 are configured to correspond substantially to the dimensions of the slots 174 in the bayonet connector 170. Additionally, each of the engagement members 334 may include a ridge 336 to help maintain an established bayonet connection (for example, by interlocking with a corresponding slot 174). For instance, the ridge 336 of each engagement member 334 is configured to seat within a corresponding furrow 174c of each of the slots 174. The ridge 336 may have a linear form that extends radially on the underside of each engagement member 334 (for example, from the sidewall of the bayonet adapter 330 to the edge of the engagement member 334). Due to the relatively close fit between the engagement members 334 of the bayonet adapter 330 and the slots 174 of the bayonet connector 170, a haptic and/or auditory feedback (for example, audible click) may be produced to notify an adult vaper that the nicotine cartridge 100 has been properly coupled to the device body 300.

The knurled connector 340 is configured to connect/link the sleeve section 310 and the battery section housing 360 of the device body 300. As illustrated, the knurling on the exterior sidewall of the knurled connector 340 may be in the form of two bands separated by an unknurled section in between, wherein the proximal (for example, upper) band is for engagement with the sleeve section 310, and the distal (for example, lower) band is for engagement with the battery section housing 360. In an example embodiment, the knurling is obscured from view by the sleeve section 310 and the battery section housing 360 when the device body 300 is assembled. The exterior of the sleeve section 310 and the battery section housing 360 may also be flush with the exposed unknurled section of the knurled connector 340 when the device body 300 is assembled. The knurling may include straight (for example, longitudinal) ridges. However, it should be understood that other patterns may be suitable. For instance, the knurling may alternatively have an annular pattern, an angled pattern, or a diamond pattern.

As shown in FIG. 16, the knurled connector 340 defines a pair of pathways 344. The pair of pathways 344 may disposed diametrically in the knurled connector 340. As a result, a line extending through the knurled connector 340 via the pathways 344 may intersect a central longitudinal axis of the knurled connector 340 while coinciding with a diameter of the knurled connector 340. Furthermore, the exterior of the knurled connector 340 may be recessed (for example, to a greater degree than the knurling) from the rim to a region around each pathway 344 to provide an entrance (for example, cove-like point of ingress) to each pathway 344 when the sleeve section 310 is engaged with the knurled connector 340. In such an instance, the inflowing air during vaping can reach the pathways 344 via these recessed entrances.

The knurled connector 340 also defines an opening 342 and a hole 346 to accommodate parts of the battery subassembly 350. In particular, when the battery section 320 is assembled, the pin 352 will extend through the opening 342 in the knurled connector 340 and into the opening 332 in the bayonet adapter 330. In this assembled state, the proximal end of the pin 352 may be at approximately the same level as the engagement members 334 of the bayonet adapter 330, although example embodiments are not limited thereto. The hole 346 in the knurled connector 340 is configured to expose the light pipe 358. The light pipe 358 may include red, green, and blue (RGB) light-emitting diodes (LED), wherein these primary colors can be combined to produce white light as well as numerous other hues of light. As a result, the emitted light can be transmitted by the light pipe 358 in a manner that would be visible and useful to an adult vaper.

The battery subassembly 350 additionally includes a first printed circuit board (PCB) 354 configured to mechanically support and electrically connect various parts of the battery section 320, including a first sensor 356, the pin 352, and the light pipe 358. In an example embodiment, the first sensor 356 may be a combined pressure sensor and temperature sensor. Additionally, the pin 352 may be a pogo pin or spring-loaded pin. The light pipe 358 may include five light-emitting diodes, although it should be understood that a different number may be implemented. The light pipe 358 may be utilized to communicate a variety of types of information to an adult vaper.

For instance, with regard to battery level, an illumination of all five lights by the light pipe 358 may indicate a full battery level, while an illumination of fewer lights, such as three lights, may indicate a medium battery level. On the other hand, an illumination of only one light may indicate a low battery level. The color of the one or more lights may also change (for example, change to a warning color such as red) to enhance the recognition of a given indication. Furthermore, the one or more lights may blink to help indicate the urgency of a particular indication. The desired type of information or function may be accessed by pressing the button 372 (FIG. 5) at the distal end of the nicotine e-vaping device 500. In an example embodiment, pressing the button 372 once may display the battery level (for example, for 5 seconds). In another instance, successively pressing the button 372 in a short period of time may result in a different function or display. Specifically, successively pressing the button 372 five times may turn on/off the nicotine e-vaping device 500. Therefore, the nicotine e-vaping device 500 may be puff-activated and/or button-activated.

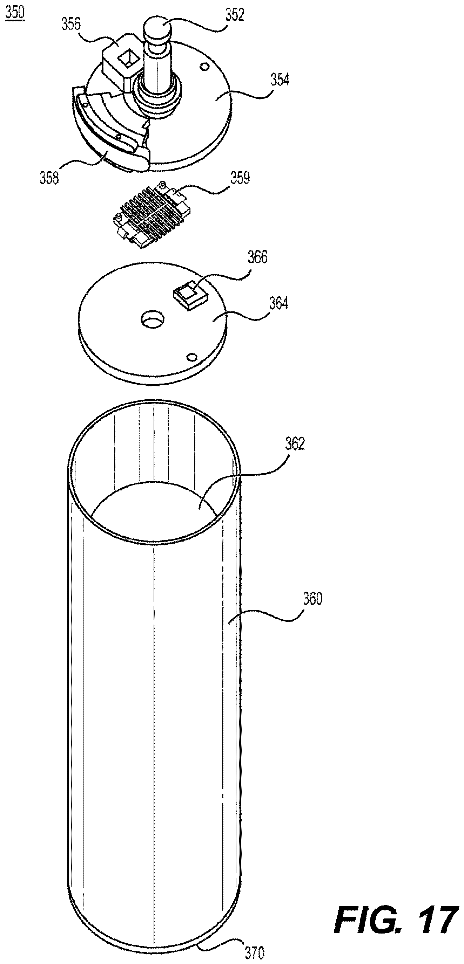

FIG. 17 is a partially-exploded view of the battery subassembly in FIG. 16. Referring to FIG. 17, the battery subassembly 350 also includes a second printed circuit board (PCB) 364 configured to mechanically support and electrically connect at least a second sensor 366. The second sensor 366 may be a temperature sensor (for example, second temperature sensor). The battery subassembly 350 further includes a controller 359 which may be mechanically supported and electrically connected by the first printed circuit board 354 and/or the second printed circuit board 364. A power supply 362 is disposed within the battery section housing 360. The power supply 362 may be a rechargeable battery configured to supply an electric current to the integral heater-thermocouple 250 of the nicotine cartridge 100 in response to a puff-activation or a button-activation.

At least one of the first sensor 356 or the second sensor 366 may be configured to measure a voltage difference between the first segment 252 and the second segment 256 of the integral heater-thermocouple 250 as a result of the supply of the electrical energy from the power supply 362 (for example, when the nicotine pre-vapor formulation 180 is being heated to generate a nicotine vapor). When both the first sensor 356 and the second sensor 366 are used to measure the voltage, the measured values may be averaged to obtain an average value. The controller 359 may be configured to adjust the supply of the electrical energy to the integral heater-thermocouple 250 based on the voltage difference measured by at least one of the first sensor 356 or the second sensor 366. In an example embodiment, the controller 359 is configured to look up a temperature of the integral heater-thermocouple 250 based on the voltage difference and to cease the supply of the electrical energy when the temperature exceeds an upper threshold value.

Because the measured voltage at the junction 254 of the integral heater-thermocouple 250 is temperature-dependent, the relationship between voltage and temperature may be determined from empirical studies and organized/stored in a lookup table (LUT). In such an instance, during vaping, the measured voltage can be used by the controller 359 to access the temperature at the junction 254 of the integral heater-thermocouple 250 from the lookup table (which may be stored in the controller 359 or in a separate memory). If the temperature is determined by the controller 359 to exceed an upper threshold value, then an adjustment may be made by the controller 359 to scale down the duty cycle (for example, duty cycle of 50 percent scaled down to 25 percent). On the other hand, if the temperature is determined by the controller 359 to be below a lower threshold value, then an adjustment may be made by the controller 359 to scale up the duty cycle (for example, duty cycle of 50 percent scaled up to 75 percent). Such temperature control may be operated in a closed loop. In an alternative embodiment, the relationship between voltage and temperature may be represented as an equation and calculated instead of accessed from a LUT.

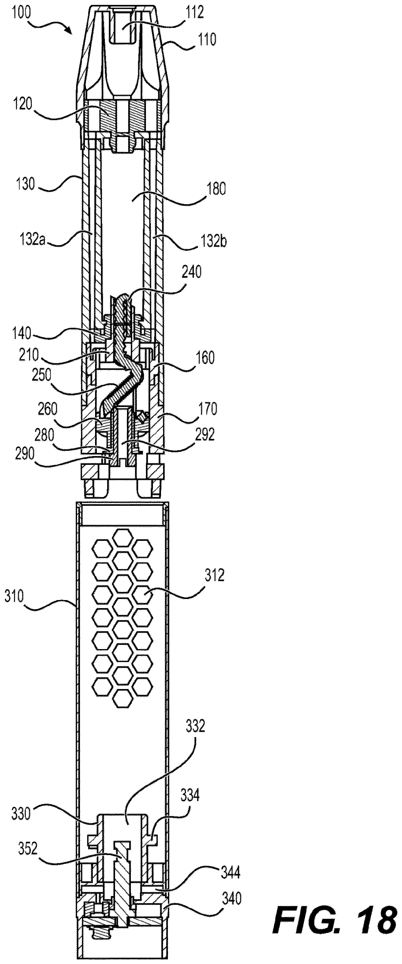

FIG. 18 is a cross-sectional view of the nicotine cartridge and a partial cross-sectional view of the device body of FIG. 6 when not engaged. Referring to FIG. 18, the nicotine cartridge 100 is configured for insertion into the sleeve section 310 of the device body 300 such the slots 174 (FIG. 8) of the bayonet connector 170 initially mate with the engagement members 334 of the bayonet adapter 330. In particular, the longitudinal portion 174a (FIG. 9) of each slot 174 is configured to receive a corresponding engagement member 334 until the engagement member 334 abuts the end surface of the longitudinal portion 174a. Once this initial mating occurs, the nicotine cartridge 100 can then be turned/twisted/rotated (for example, clockwise) relative to the device body 300 such that the engagement members 334 slide circumferentially within the corresponding circumferential portions 174b of the slots 174 until the ridges 336 (FIG. 16) of the engagement members 334 are resiliently seated within the furrows 174c (FIG. 8) of the slots 174, thereby resulting in the nicotine cartridge 100 being mechanically interlocked with the device body 300.

With regard to electrical engagement, the first segment 252 (FIG. 12) of the integral heater-thermocouple 250 of the nicotine cartridge 100 may be electrically connected to the bayonet adapter 330 of the device body 300, while the second segment 256 (FIG. 12) of the integral heater-thermocouple 250 of the nicotine cartridge 100 may be electrically connected to the pin 352 of the device body 300. In turn, the bayonet adapter 330 of the device body 300 may be electrically connected to the negative terminal of the power supply 362, while the pin 352 of the device body 300 may be electrically connected to the positive terminal of the power supply 362. The electrical paths from the terminals of the power supply 362 to the integral heater-thermocouple 250 will be discussed in more detail herein.

When engaged (mechanically and electrically) with the device body 300, the nicotine cartridge 100 may be substantially obscured from view with the exception of the mouthpiece 110. With regard to this substantial obscurity, portions of the tank 130, the nicotine pre-vapor formulation 180, and the vaporizer 150 may be partly visible through the air inlets 312 in the sleeve section 310 of the device body 300. As a result, when adequate ambient light is present, the level of the nicotine pre-vapor formulation 180 within the nicotine cartridge 100 may be visually gauged by an adult vaper. In contrast, when ambient light is not present or not adequate, then the adult vaper may rely on a notification from the light pipe 358 that the nicotine pre-vapor formulation 180 within the nicotine cartridge 100 is low and/or depleted.

The removal of the nicotine cartridge 100 can be achieved by reversing the motions associated with engagement, such as turning the nicotine cartridge 100 in the opposite direction (for example, counterclockwise) and pulling the nicotine cartridge 100 away from the device body 300. Because the engagement members 334 of the bayonet adapter 330 are resiliently seated within the furrows 174c of the slots 174, the force required to untwist and disengage the nicotine cartridge 100 may be greater than the force used to twist and engage the nicotine cartridge 100, which may help to ensure that the disengagement of the nicotine cartridge 100 from the device body 300 is a deliberate action rather than an unintentional occurrence. Furthermore, in the interest of brevity, it should be understood that not all of the labeled parts of FIG. 18 were specifically mentioned in connection with this section, because such parts were already discussed *above* and did not merit further repetition or discussion.

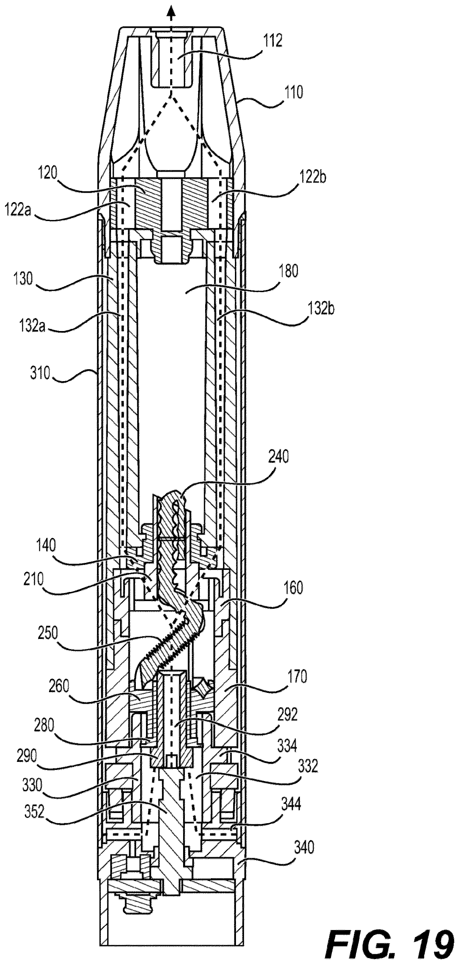

FIG. 19 is a cross-sectional view of the nicotine cartridge and a partial cross-sectional view of the device body of FIG. 18 when engaged. Referring to FIG. 19, the flow of air to the integral heater-thermocouple 250 and the flow of generated vapor therefrom are shown with dashed lines. In particular, upon the application of a negative pressure to the mouthpiece 110 of the nicotine e-vaping device 500, air is drawn into the air inlets 312 (FIG. 1) in the sleeve section 310 and through an annular space between the sleeve section 310 and the nicotine cartridge 100 in a direction toward the knurled connector 340. Next, the air flows toward and through the pathways 344 in the knurled connector 340. The flow of air within the annular space toward the pathways 344 in the knurled connector 340 may include a circumferential flow (for example, from the annular space in front of the nicotine cartridge 100 around to the side or from the annular space behind the nicotine cartridge 100 around to the side). The flow of air through the pathways 344 in the knurled connector 340 is in an inward direction (for example, radial direction toward the central longitudinal axis of the nicotine e-vaping device 500).

Upon passing through the pathways 344 in the knurled connector 340, the streams of air then flow to the second electrical contact 290 and enter the passage 292 through the second electrical contact 290 via the grooves 298 (FIG. 13) in the base portion 296 of the second electrical contact 290. The streams of air also converge when flowing through the passage 292 in the second electrical contact 290.

The air exiting the passage 292 in the second electrical contact 290 flows through/past the integral heater-thermocouple 250 (for example, which was puff-activated) and the wick 240 to entrain the generated nicotine vapor. Afterwards, the entrained nicotine vapor passes through the apertures 218 (FIG. 10) in the first module cover 210. In an example embodiment, the passage of the nicotine vapor through the first module cover 210 may split the vapor into eight streams as a result of the eight apertures 218 (FIG. 10). The split nicotine vapor then consolidates into two streams which flow through the vapor channels 132a and 132b in the tank 130 and also through the apertures 122a and 122b in the first seal 120 (FIG. 7). After flowing through the first seal 120, the two streams of nicotine vapor converge into one stream to exit through the vapor outlet 112 of the mouthpiece 110. However, it should be understood that example embodiments are not limited thereto. For instance, as noted *above,* the mouthpiece 110 may have different configurations for the vapor outlet 112, therefore allowing for other variations as to the exiting nicotine vapor flow.

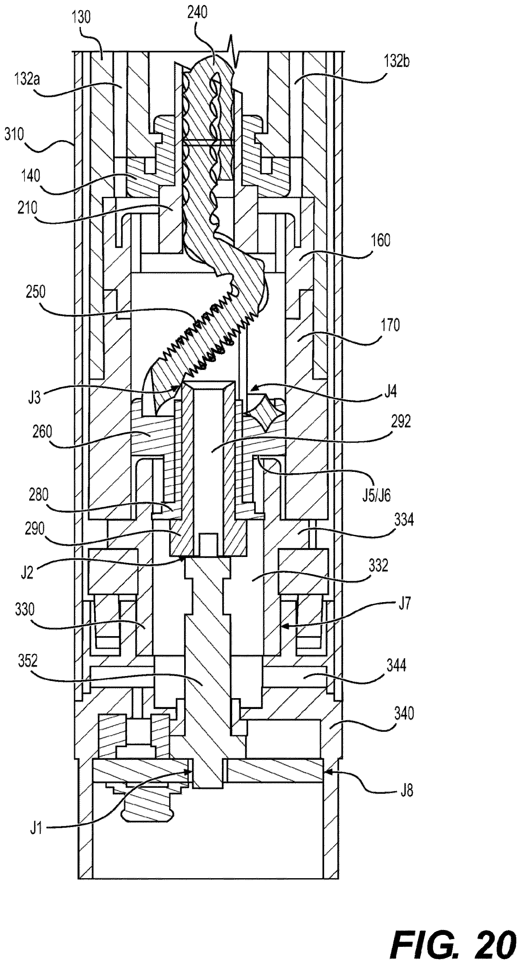

FIG. 20 is an enlarged view of the cross-section of FIG. 19. Referring to FIG. 20, the electrical paths from the terminals of the power supply 362 (FIG. 17) to the integral heater-thermocouple 250 includes a plurality of electrical junctions (J1-J8). J1 is an electrical junction of the printed circuit board (for example, copper of first printed circuit board 354) and the pin 352 (for example, gold-plated brass). J2 is an electrical junction of the pin 352 (for example, gold-plated brass) and the second electrical contact 290 (for example, gold-plated brass). J3 is an electrical junction of the second electrical contact 290 (for example, gold-plated brass) and the second segment 256 (for example, nickel-chromium alloy) of the integral heater-thermocouple 250. J4 is an electrical junction of the first segment 252 (for example, nickel-aluminum alloy) of the integral heater-thermocouple 250 and the second module cover 260 (for example, stainless steel). J5 is an electrical junction of the second module cover 260 (for example, stainless steel) and the first electrical contact 270 (gold-plated steel). J6 is an electrical junction of the first electrical contact 270 (for example, gold-plated steel) and the bayonet adapter 330 (for example, stainless steel). J7 is an electrical junction of the bayonet adapter 330 (for example, stainless steel) and the knurled connector 340 (for example, chrome-plated brass). J8 is an electrical junction of the knurled connector 340 (for example, chrome-plated brass) and the printed circuit board (for example, copper of first printed circuit board 354).

Therefore, when the nicotine e-vaping device 500 is activated (for example, puff-activated), an electric current may be regarded as flowing from the positive terminal of the power supply 362 to the printed circuit board 354, from the printed circuit board 354 to the pin 352, from the pin 352 to the second electrical contact 290, from the second electrical contact 290 to the second segment 256 of the integral heater-thermocouple 250, from the second segment 256 to the first segment 252 of the integral heater-thermocouple 250, from the first segment 252 of the integral heater-thermocouple 250 to the second module cover 260, from the second module cover 260 to the first electrical contact 270, from the first electrical contact 270 to the bayonet adapter 330, from the bayonet adapter 330 to the knurled connector 340, from the knurled connector 340 to the printed circuit board 354, and from the printed circuit board 354 to the negative terminal of the power supply 362. It should be understood that the requisite circuits in the nicotine e-vaping device 500 are connected to the power supply 362, although such connections are not necessarily illustrated in the drawings.

The electrical junctions (J1-J8) discussed above may be taken into account by the controller 359 when determining the temperature at the junction 254 of the integral heater-thermocouple 250. Based on the known materials of electrical junctions (J1-J8), empirical studies can be conducted to generate a calibration curve that covers an expected operating temperature range of the integral heater-thermocouple 250. As a result, a factor or correction can be applied to an initial temperature determination by the controller 359 so as to achieve a corrected temperature that takes into account the electrical junctions (J1-J8) connected to the integral heater-thermocouple 250.

While a number of example embodiments have been disclosed herein, it should be understood that other variations may be possible as long as they are encompassed by the scope of the appended claims.

## Claims

1. A nicotine cartridge (100) for a nicotine e-vaping device (500), comprising:
a housing defining a reservoir (134) containing a nicotine pre-vapor formulation (180);
a wick (240) configured to transport the nicotine pre-vapor formulation (180) by capillary action; and
an integral heater-thermocouple (250) configured to heat the nicotine pre-vapor formulation (180) in the wick (240) to generate a nicotine vapor, the integral heater-thermocouple (250) including a first segment (252) made of a first alloy and a second segment (256) made of a second alloy;
wherein the integral heater-thermocouple (250) is in a form of a helical structure wrapped around the wick (240), the helical structure including a plurality of coils, the plurality of coils including at least one coil of the first alloy and at least one coil of the second alloy; wherein the first alloy has a first electrical resistivity and a first thermal conductivity, the second alloy has a second electrical resistivity and a second thermal conductivity, **characterized in that** the first electrical resistivity is less than the second electrical resistivity, and the first thermal conductivity is greater than the second thermal conductivity; and
**in that** the at least one coil of the first alloy is downstream from the at least one coil of the second alloy.

2. The nicotine cartridge (100) of claim 1, wherein the housing includes a sidewall and a first longitudinal axis, the sidewall of the housing defining at least one vapor channel extending therethrough and along the first longitudinal axis of the housing, optionally wherein the at least one vapor channel includes a first vapor channel (132a) and a second vapor channel (132b), the reservoir (134) being between the first vapor channel (132a) and the second vapor channel (132b).

3. The nicotine cartridge (100) of claim 1 or 2, wherein the integral heater-thermocouple (250) has a Seebeck coefficient of about 35 to 75 µV/°C.

4. The nicotine cartridge (100) of any preceding claim, wherein the integral heater-thermocouple (250) has an overall resistance of about 0.5 to 3.5 Ω.

5. The nicotine cartridge (100) of any preceding claim, wherein the housing has a first longitudinal axis, and the helical structure has a second longitudinal axis that intersects the first longitudinal axis to form an oblique angle.

6. The nicotine cartridge (100) of any preceding claim, wherein the at least one coil of the first alloy is welded to the at least one coil of the second alloy at a junction.

7. The nicotine cartridge (100) of any preceding claim, wherein the plurality of coils is in a form of five to ten coils, optionally wherein the plurality of coils includes one coil of the first alloy and five coils of the second alloy or wherein the plurality of coils includes two coils of the first alloy and four coils of the second alloy.

8. The nicotine cartridge (100) of any preceding claim, wherein the first alloy is a nickel-aluminum alloy, and the second alloy is a nickel-chromium alloy.

9. The nicotine cartridge (100) of claim 8, wherein the nickel-aluminum alloy includes 95 percent nickel and 2 percent aluminum.

10. The nicotine cartridge (100) of claim 8, wherein the nickel-chromium alloy includes 90 percent nickel and 10 percent chromium.

11. A nicotine e-vaping device (500) comprising:
a nicotine cartridge (100) according to claim 1; and
a device body (300) configured to receive the nicotine cartridge (100), the device body (300) including a power supply (362), at least one sensor (356, 366), and a controller (359), the power supply (362) configured to deliver a supply of electrical energy to the integral heater-thermocouple (250) to heat the nicotine pre-vapor formulation (180) in the wick (240) to generate a nicotine vapor, the at least one sensor (356, 366) configured to measure a voltage difference between the first segment (252) and the second segment (256) of the integral heater-thermocouple (250) as a result of the supply of the electrical energy from the power supply (362), the controller (359) configured to adjust the supply of the electrical energy to the integral heater-thermocouple (250) based on the voltage difference measured by the at least one sensor (356, 366).

12. The nicotine e-vaping device (500) of claim 11, wherein the controller (359) is configured to calculate a temperature of the integral heater-thermocouple (250) based on the voltage difference and to cease the supply of the electrical energy when the temperature exceeds an upper threshold value.

13. The nicotine e-vaping device (500) of claim 11 or 12, wherein the device body further includes a sleeve section (310) configured to receive the nicotine cartridge (100), the sleeve section (310) defining an array of inlet openings (312).

14. The nicotine e-vaping device (500) of claim 13, wherein the array of inlet openings (312) are in a form of a honeycomb pattern configured to facilitate an intake of ambient air which enters the device body and travels toward the power supply (362) before moving inward and then toward the integral heater-thermocouple (250).

## Patentansprüche

1. Nikotinpatrone (100) für eine Nikotin-E-Dampfvorrichtung (500), umfassend:
ein Gehäuse, das einen Vorratsbehälter (134) definiert, der eine Nikotin-Vordampfformulierung (180) enthält;
einen Docht (240), der zum Transportieren der Nikotin-Vordampfformulierung (180) durch Kapillarwirkung ausgelegt ist; und
ein einstückiges Heizvorrichtung-Thermoelement (250), ausgelegt zum Erwärmen der Nikotin-Vordampfformulierung (180) in dem Docht (240) zum Erzeugen eines Nikotindampfes, wobei das einstückige Heizvorrichtung-Thermoelement (250) ein erstes, aus einer ersten Legierung hergestelltes Segment (252) und ein zweites, aus einer zweiten Legierung hergestelltes Segment (256) beinhaltet;
wobei das einstückige Heizvorrichtung-Thermoelement (250) die Form einer um den Docht (240) gewickelten spiralförmigen Struktur aufweist, wobei die spiralförmige Struktur eine Vielzahl von Wicklungen beinhaltet, wobei die Vielzahl von Wicklungen wenigstens eine Wicklung der ersten Legierung und wenigstens eine Wicklung der zweiten Legierung beinhaltet; wobei die erste Legierung einen ersten spezifischen elektrischen Widerstand und eine erste Wärmeleitfähigkeit aufweist, die zweite Legierung einen zweiten spezifischen elektrischen Widerstand und eine zweite Wärmeleitfähigkeit aufweist, **dadurch gekennzeichnet, dass** der erste spezifische elektrische Widerstand geringer ist als der zweite spezifische elektrische Widerstand und die erste Wärmeleitfähigkeit größer ist als die zweite Wärmeleitfähigkeit; und
dass die wenigstens eine Wicklung der ersten Legierung der wenigstens einen Wicklung der zweiten Legierung nachgelagert ist.

2. Nikotinpatrone (100) nach Anspruch 1, wobei das Gehäuse eine Seitenwand und eine erste Längsachse beinhaltet, wobei die Seitenwand des Gehäuses wenigstens einen sich durch sie hindurch und entlang der ersten Längsachse des Gehäuses erstreckenden Dampfkanal definiert, wobei der wenigstens eine Dampfkanal optional einen ersten Dampfkanal (132a) und einen zweiten Dampfkanal (132b) beinhaltet, wobei der Vorratsbehälter (134) zwischen dem ersten Dampfkanal (132a) und dem zweiten Dampfkanal (132b) angeordnet ist.

3. Nikotinpatrone (100) nach Anspruch 1 oder 2, wobei das einstückige Heizvorrichtung-Thermoelement (250) einen Seebeck-Koeffizienten von etwa 35 bis 75 µV/°C aufweist.

4. Nikotinpatrone (100) nach einem beliebigen vorhergehenden Anspruch, wobei das einstückige Heizvorrichtung-Thermoelement (250) einen Gesamtwiderstand von etwa 0,5 bis 3,5 Q aufweist.

5. Nikotinpatrone (100) nach einem beliebigen vorhergehenden Anspruch, wobei das Gehäuse eine erste Längsachse aufweist und die spiralförmige Struktur eine zweite Längsachse aufweist, die die erste Längsachse schneidet, um einen schrägen Winkel zu bilden.

6. Nikotinpatrone (100) nach einem beliebigen vorhergehenden Anspruch, wobei die wenigstens eine Wicklung der ersten Legierung mit der wenigstens einen Wicklung der zweiten Legierung an einer Verbindungsstelle verschweißt ist.

7. Nikotinpatrone (100) nach einem beliebigen vorhergehenden Anspruch, wobei die Vielzahl der Wicklungen in Form von fünf bis zehn Wicklungen vorliegt, optional wobei die Vielzahl der Wicklungen eine Wicklung der ersten Legierung und fünf Wicklungen der zweiten Legierung beinhaltet oder wobei die Vielzahl der Wicklungen zwei Wicklungen der ersten Legierung und vier Wicklungen der zweiten Legierung beinhaltet.

8. Nikotinpatrone (100) nach einem beliebigen vorhergehenden Anspruch, wobei die erste Legierung eine Nickel-Aluminium-Legierung ist und die zweite Legierung eine NickelChrom-Legierung ist.

9. Nikotinpatrone (100) nach Anspruch 8, wobei die Nickel-Aluminium-Legierung 95 Prozent Nickel und 2 Prozent Aluminium beinhaltet.

10. Nikotinpatrone (100) nach Anspruch 8, wobei die NickelChrom-Legierung 90 Prozent Nickel und 10 Prozent Chrom beinhaltet.

11. Nikotin-E-Dampfvorrichtung (500), umfassend:
eine Nikotinpatrone (100) nach Anspruch 1; und
einen Vorrichtungskörper (300), ausgelegt zum Aufnehmen der Nikotinpatrone (100), wobei der Vorrichtungskörper (300) eine Energieversorgung (362), wenigstens einen Sensor (356, 366) und eine Steuerung (359) beinhaltet, wobei die Energieversorgung (362) zum Zuführen einer Versorgung mit elektrischer Energie zu dem einstückigen Heizvorrichtung-Thermoelement (250) zum Erwärmen der Nikotin-Vordampfformulierung (180) in dem Docht (240) zum Erzeugen eines Nikotindampfes ausgelegt ist, wobei der wenigstens eine Sensor (356, 366) zum Messen einer Spannungsdifferenz zwischen dem ersten Segment (252) und dem zweiten Segment (256) des einstückigen Heizvorrichtung-Thermoelements (250) als Ergebnis der Zuführung der elektrischen Energie von der Energieversorgung (362) ausgelegt ist, wobei die Steuerung (359) zum Anpassen der Zuführung der elektrischen Energie zu dem einstückigen Heizvorrichtung-Thermoelement (250) basierend auf der von dem wenigstens einen Sensor (356, 366) gemessenen Spannungsdifferenz ausgelegt ist.

12. Nikotin-E-Dampfvorrichtung (500) nach Anspruch 11, wobei die Steuerung (359) zum Berechnen einer Temperatur des einstückigen Heizvorrichtung-Thermoelements (250) basierend auf der Spannungsdifferenz und zum Beenden der Zuführung der elektrischen Energie ausgelegt ist, wenn die Temperatur einen oberen Schwellenwert überschreitet.

13. Nikotin-E-Dampfvorrichtung (500) nach Anspruch 11 oder 12, wobei der Vorrichtungskörper ferner einen Hülsen-Teilbereich (310) beinhaltet, der zum Aufnehmen der Nikotinpatrone (100) ausgelegt ist, wobei der Hülsen-Teilbereich (310) eine Anordnung von Einlassöffnungen (312) definiert.

14. Nikotin-E-Dampfvorrichtung (500) nach Anspruch 13, wobei die Anordnung der Einlassöffnungen (312) die Form eines Wabenmusters aufweist und zum Erleichtern des Ansaugens von Umgebungsluft ausgelegt ist, die in den Vorrichtungskörper eintritt und in Richtung der Energieversorgung (362) strömt, bevor sie sich nach innen und dann in Richtung des einstückigen Heizvorrichtung-Thermoelements (250) bewegt.

## Revendications

1. Cartouche de nicotine (100) pour un dispositif d'e-vapotage de nicotine (500), comprenant :
un logement définissant un réservoir (134) contenant une formulation prévapeur de nicotine (180) ;
une mèche (240) configurée pour transporter la formulation prévapeur de nicotine (180) par action capillaire ; et
un dispositif de chauffage-thermocouple monobloc (250) configuré pour chauffer la formulation prévapeur de nicotine (180) dans la mèche (240) afin de générer une vapeur de nicotine, le dispositif de chauffage-thermocouple monobloc (250) comprenant un premier segment (252) constitué d'un premier alliage et un deuxième segment (256) constitué d'un deuxième alliage ;
dans laquelle le dispositif de chauffage-thermocouple monobloc (250) se présente sous la forme d'une structure hélicoïdale enveloppée autour de la mèche (240), la structure hélicoïdale comprenant une pluralité de serpentins, la pluralité de serpentins comprenant au moins un serpentin du premier alliage et au moins un serpentin du deuxième alliage ; dans laquelle le premier alliage a une première résistivité électrique et une première conductivité thermique, le deuxième alliage a une deuxième résistivité électrique et une deuxième conductivité thermique, **caractérisée en ce que** la première résistivité électrique est inférieure à la deuxième résistivité électrique, et la première conductivité thermique est supérieure à la deuxième conductivité thermique ; et
**en ce que** l'au moins un serpentin du premier alliage est en aval de l'au moins un serpentin du deuxième alliage.

2. Cartouche de nicotine (100) selon la revendication 1, dans laquelle le logement comprend une paroi latérale et un premier axe longitudinal, la paroi latérale du logement définissant au moins un canal de vapeur s'étendant à travers elle et le long du premier axe longitudinal du logement, éventuellement dans laquelle l'au moins un canal de vapeur comprend un premier canal de vapeur (132a) et un deuxième canal de vapeur (132b), le réservoir (134) étant entre le premier canal de vapeur (132a) et le deuxième canal de vapeur (132b).

3. Cartouche de nicotine (100) selon la revendication 1 ou 2, dans laquelle le dispositif de chauffage-thermocouple monobloc (250) a un coefficient de Seebeck d'environ 35 à 75 µV/°C.

4. Cartouche de nicotine (100) selon l'une quelconque des revendications précédentes, dans laquelle le dispositif de chauffage-thermocouple monobloc (250) a une résistance globale d'environ 0,5 à 3,5 Ω.

5. Cartouche de nicotine (100) selon l'une quelconque des revendications précédentes, dans laquelle le logement a un premier axe longitudinal, et la structure hélicoïdale a un deuxième axe longitudinal qui coupe le premier axe longitudinal pour former un angle oblique.

6. Cartouche de nicotine (100) selon l'une quelconque des revendications précédentes, dans laquelle l'au moins un serpentin du premier alliage est soudé à l'au moins un serpentin du deuxième alliage au niveau d'une jonction.

7. Cartouche de nicotine (100) selon l'une quelconque des revendications précédentes, dans laquelle la pluralité de serpentins se présente sous la forme de cinq à dix serpentins, éventuellement dans laquelle la pluralité de serpentins comprend un serpentin du premier alliage et cinq serpentins du deuxième alliage ou dans laquelle la pluralité de serpentins comprend deux serpentins du premier alliage et quatre serpentins du deuxième alliage.

8. Cartouche de nicotine (100) selon l'une quelconque des revendications précédentes, dans laquelle le premier alliage est un alliage nickel-aluminium, et le deuxième alliage est un alliage nickel-chrome.

9. Cartouche de nicotine (100) selon la revendication 8, dans laquelle l'alliage nickel-aluminium comprend 95 % de nickel et 2 % d'aluminium.

10. Cartouche de nicotine (100) selon la revendication 8, dans laquelle l'alliage nickel-chrome comprend 90 % de nickel et 10 % de chrome.

11. Dispositif d'e-vapotage de nicotine (500), comprenant :
une cartouche de nicotine (100) selon la revendication 1 ; et
un corps de dispositif (300) configuré pour recevoir la cartouche de nicotine (100), le corps de dispositif (300) comprenant une alimentation électrique (362), au moins un capteur (356, 366), et un dispositif de commande (359), l'alimentation électrique (362) étant configurée pour fournir une alimentation en énergie électrique au dispositif de chauffage-thermocouple monobloc (250) pour chauffer la formulation prévapeur de nicotine (180) dans la mèche (240) afin de générer une vapeur de nicotine, l'au moins un capteur (356, 366) étant configuré pour mesurer une différence de tension entre le premier segment (252) et le deuxième segment (256) du dispositif de chauffage-thermocouple monobloc (250) par suite de l'alimentation en énergie électrique à partir de l'alimentation électrique (362) ; le dispositif de commande (359) étant configuré pour ajuster l'alimentation en énergie électrique au dispositif de chauffage-thermocouple monobloc (250) sur la base de la différence de tension mesurée par l'au moins un capteur (356, 366).

12. Dispositif d'e-vapotage de nicotine (500) selon la revendication 11, dans lequel le dispositif de commande (359) est configuré pour calculer une température du dispositif de chauffage-thermocouple monobloc (250) sur la base de la différence de tension et pour arrêter l'alimentation en énergie électrique lorsque la température dépasse une valeur seuil supérieure.

13. Dispositif d'e-vapotage de nicotine (500) selon la revendication 11 ou 12, dans lequel le corps de dispositif comprend en outre une section de manchon (310) configurée pour recevoir la cartouche de nicotine (100), la section de manchon (310) définissant un réseau d'ouvertures d'entrée (312).

14. Dispositif d'e-vapotage de nicotine (500) selon la revendication 13, dans lequel le réseau d'ouvertures d'entrée (312) se présente sous la forme d'un motif en nid d'abeilles configuré pour faciliter une admission d'air ambiant qui entre dans le corps de dispositif et se déplace vers l'alimentation électrique (362) avant de se déplacer vers l'intérieur, puis vers le dispositif de chauffage-thermocouple monobloc (250).
